# EUROPEAN PATENT SPECIFICATION

(11) **EP 4 359 302 B1**
(45) Date of publication and mention of the grant of the patent: **12.02.2025**
(21) Application number: 23714339.1
(22) Date of filing: 20.03.2023
(51) Int. Cl.: B64D 1/16

(54) **FIRE FIGHTING DRONE CONFIGURED TO BE RELEASED FROM AN AIRCRAFT**
BRANDBEKÄMPFUNGSDROHNE, DIE VON EINEM LUFTFAHRZEUG FREIGELASSEN WIRD
DRONE DE LUTTE CONTRE L'INCENDIE RELÂCHÉ D'UN AÉRONEF

(30) Priority: 28.06.2022 IT 202200013687
(43) Date of publication of application: 01.05.2024
(73) Proprietor: Leonardo S.p.A., 00195 Roma (IT)
(72) Inventor: PICCOLO, Antonio, 10146 Torino (IT); BOTTONE, Emanuele, 10146 Torino (IT); MASTROIANNI, Gaetana, 10146 Torino (IT); PAPA, Umberto, 10146 Torino (IT)
(74) Representative: Studio Torta S.p.A.
(86) International application number: PCT/IB2023/052716
(87) International publication number: WO 2024/003622

(56) References cited:
- CN-A- 110 683 040
- KR-B1- 102 189 737
- US-A1- 2020 031 469
- US-B2- 10 413 763

## Description

### Cross-Reference to Related Applications

This Patent Application claims priority from Italian Patent Application No. 102022000013687 filed on June 28, 2022.

### Technical Field

The present invention refers to a fire done configured to be released from an aircraft.

### Background

To extinguish fires in areas that are difficult for land fire fighting vehicles to reach, fire fighting liquids (water or chemical liquid fire retardants) are usually airdropped by helicopters or airplanes. These liquids are sprayed freely or released directly from containers used for their transport.

The main problems linked to airdropping can be summed follows:
a) free spraying, in order to be effective, involves launching at low altitude (i.e., as close as possible to the flames) which can only be implemented with helicopters and small airplanes; and
b) direct release, which has fewer risks for the aircraft used and makes it possible to launch larger amounts of liquids, on the other hand poses serious problems of protecting the surrounding environment, especially if the launching precision is dependent on a trajectory of the liquid released and of the container itself (although automatically lacerated to release the liquid into the air) prevalently determined by fall by gravity alone.

Therefore, there is the need to produce an aircraft that is capable of carrying a container in proximity to the fire and of releasing it at low altitude.

The document KR102189737 describes a rotary-wing drone for launching objects.

### Summary of the Invention

The aforesaid object is achieved by the present invention as it relates to a fire fighting drone configured to be released from an aircraft of the type described in claim 1.

### Brief Description of the Drawings

Fig. 1 illustrates, in a front view, a fire fighting drone configured to be released from an aircraft produced according to the dictates of the present invention;
Fig. 2 illustrates, in a bottom view, the drone of Fig. 1;
Fig. 3 illustrates the drone of Fig. 1 in a different operating position;
Fig. 4 illustrates an operation of discharging fire fighting liquid performed by the drone;
Fig. 5 illustrates an operation of launching the drone from the aircraft; and
Figs. 6A and 6B illustrate operations performed by the drone configured to be released from an aircraft.

### Detailed Description of the Invention

In the figures, the references numeral 1 indicates, as a whole, a fire fighting drone configured to be released from an aircraft.

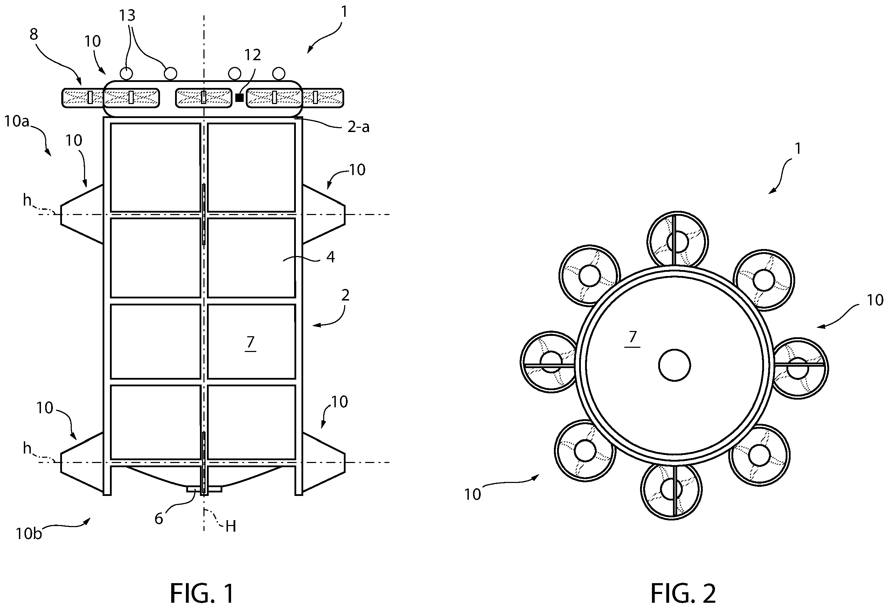

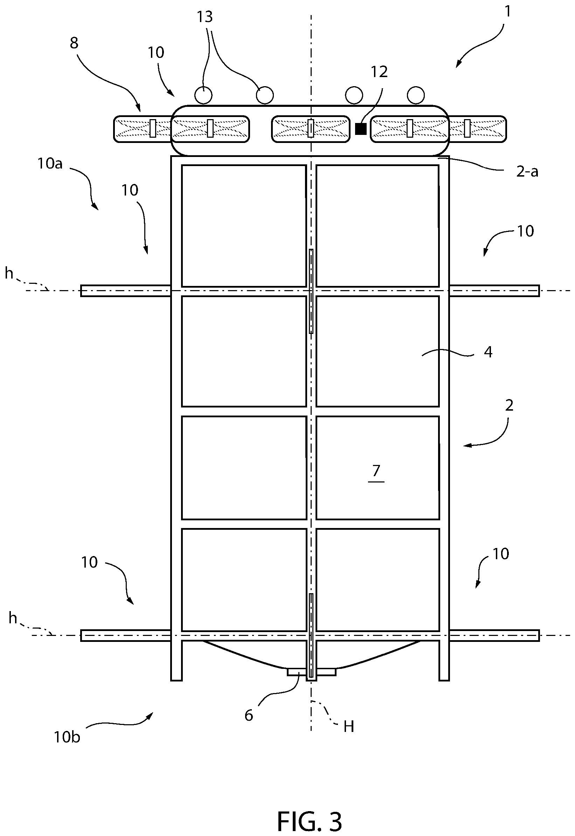

The fire fighting drone 1 comprises:
- an exoskeleton 2 defining an internal cylindrical space 3 extending along an axis H (Fig. 1) and a flexible fabric bag 4 stably housed in the internal space 3, provided with a release valve 6 and configured to contain a fire fighting liquid 7 - the release valve 6 may be set between a closed position and an open position following a release command;
- an annular support structure 8 provided along its outer perimeter with a plurality of thrusters 10 (in the example ducted propellers with rotation axes parallel to the axis H operated by electric motors) adapted to produce a thrust that enables the support structure 8 to be supported in flight by means of technologies know *per se* - the support structure 8 is connected
- a plurality of movable directional wings 10 carried by the exoskeleton 2, extending outwards from the exoskeleton itself and angularly movable relative to the exoskeleton 2 around respective axes h perpendicular to the axis H (see Figs. 1 and 3 in which the wings have different angular positions); pairs of wings 10a, 10b are spaced with respect to each other along the axis H and extend in directions parallel to the axis h; and an electronic control unit 12 adapted to control the motors of the thrusters 11, generate the release command and adapted to control the actuators that perform the rotation of the wings 10

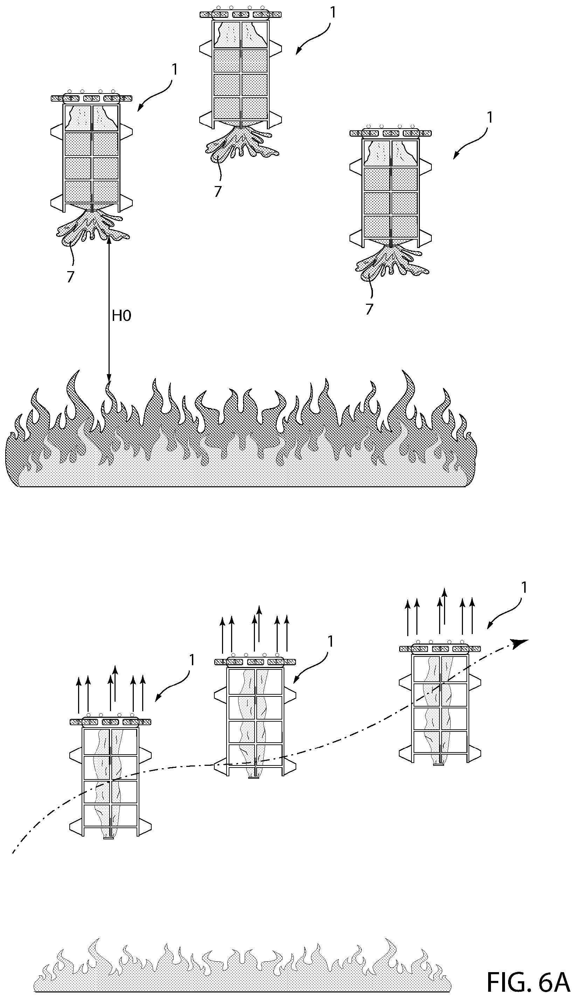

- the electronic unit 12 is configured to control the wings 10 to produce a predetermined tilt of the wings during a free-fall phase of the drone 1 which is released from an aircraft and thereby performs a certain trajectory of the drone from the aircraft to a launch zone (see Fig. 6A). The aerodynamic forces that are generated are used on the directional wings 10 to change the trajectory of the drone, which otherwise would be determined by fall by gravity alone.

In the example represented the directional wings are of flat type and have a trapezoidal shape. The wings 10 are carried in pairs by uprights of the exoskeleton 2. The exoskeleton 2 can in fact be configured as a basket provided with rectilinear uprights parallel to the axis H and circular elements coaxial to the axis H and spaced from each other along the axis H itself. Advantageously, the bag 2 is made of nylon or another impermeable fabric and has a cylindrical tubular shape when full.

The electronic unit 12 integrates the control software and the other software useful to the GNS (e.g. IMU, radar altimeter and GPS). The batteries (e.g. lithium-ion) that supply the unit 12 itself and the electric motors of the thruster 11 are also allocated in this unit 12.

The electronic unit 12 is configured to generate the release command upon reaching a predetermined altitude HO optimal relative to the ground of a pre-set type (for example 30-60 metres or even higher, depending on the height of the flames - see Fig. 6A above) and based on the signal coming from sensors 13 adapted to detect a fire, for example, optical sensors or thermal sensors arranged on the annular structure 8. Preferably, the electronic unit 12 is configured to generate the release command at an altitude greater than the optimal predetermined altitude if the thermal sensors detect a temperature greater than a pre-set threshold (for example 70 degrees or greater, depending on the protective heat shield used for the electronic unit) in order to prevent damage to the electronic unit 12.

A second end portion 2-b of the exoskeleton is provided with rollers or with wheels (not illustrated) for movement of the drone on the ground and its transport in the hold of the aircraft from which it will then be airdropped onto the target zone.

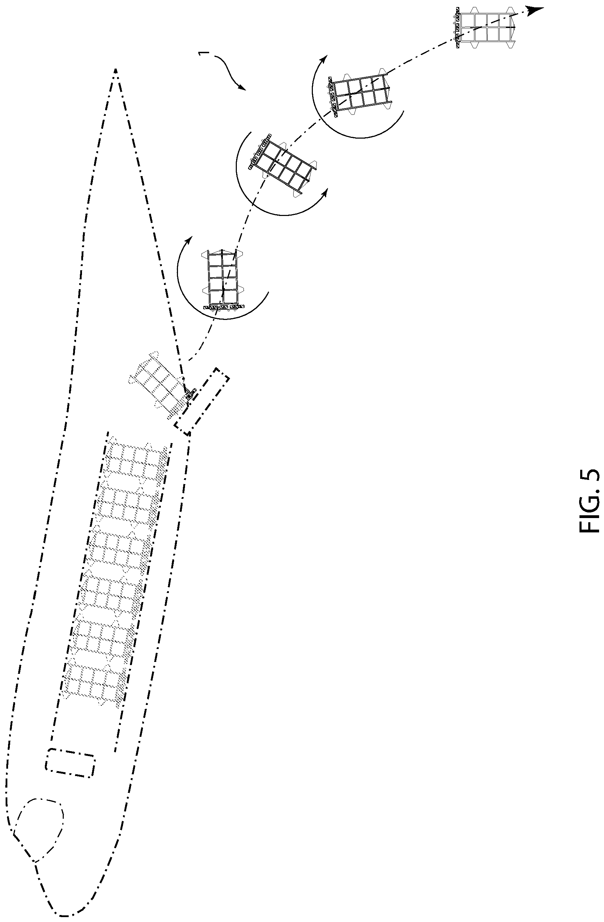

In use, the drone provided with a bag 4 filled with fire fighting liquid is loaded into the hold of a transport aircraft (Fig. 5 - represented schematically), for example a transport aircraft provided with an internal hold provided with a rear loading/unloading hatch. The hatch is opened when the aircraft is in proximity of the fire and the drone 1 is released in known ways (sliding by gravity through the rear ramp of the aircraft). The drone then falls freely (see Fig. 5) as the electric motors of the thruster 11 are switched off. The free-fall trajectory is regulated by the electronic unit 12, which regulates the angle of the plane of the wings 10 relative to the direction of fall based on the signals generated by the sensors 13 generating aerodynamic forces that help to move the drone. In this way, the drone 1 moves as close as possible to the fire (Fig. 6A, above). The electronic unit regulates the rotations of the wings 10 as a function of the current position and of the target tracked, as far as possible with the GPS/IMU and then with the thermal/optical sensors 13. thermal/optical sensors 13.

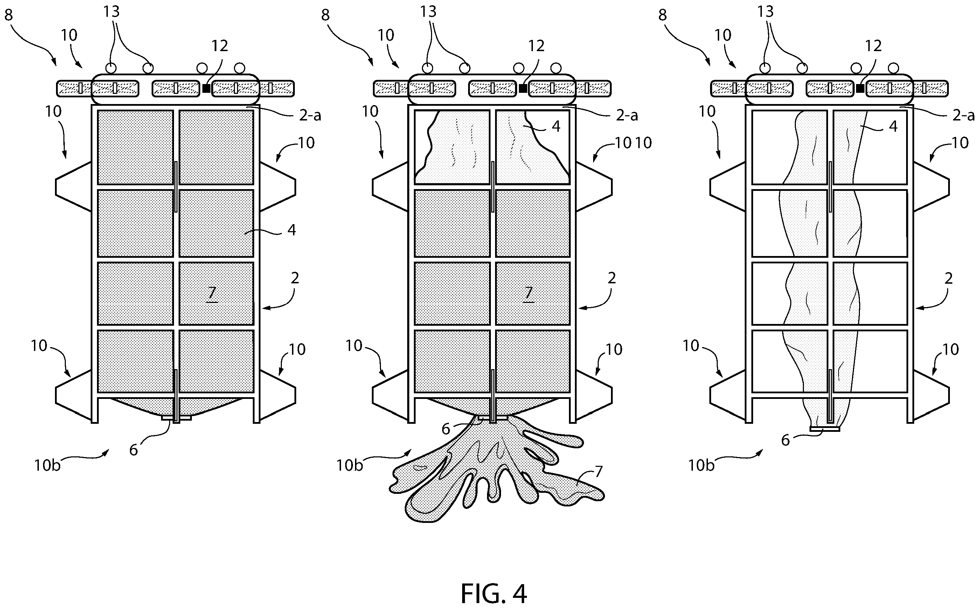

After reaching the pre-set altitude HO, the release valve 6 is opened (Fig. 4 centre and Fig. 6A above) and the extinguishing liquid 7 is released onto the fire. Immediately afterwards the thrusters 11 are activated, and are able to support the drone having a lower weight, as the extinguishing liquid has been released (Fig. 6A below).

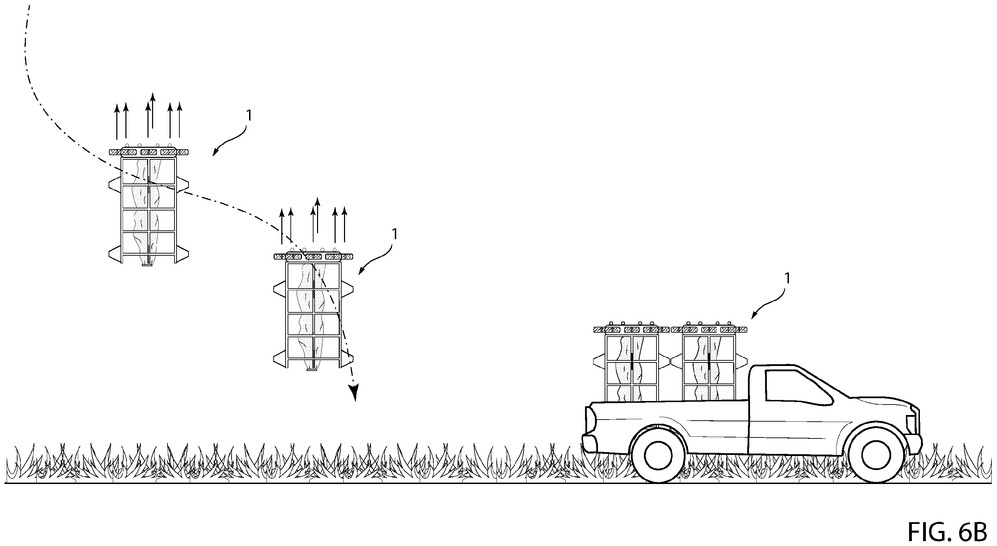

In this way, an airdroppable container of extinguishing liquid is produced, provided with a smart system for autonomous piloting during the free-fall phase caused by gravity, and which is transformed into a drone (i.e., an autonomously piloted aircraft) after release of the liquid, to reach a safe landing area for subsequent recovery and reuse (Fig. 6B). This safe area will be chosen so as to be reachable with land vehicles adapted to recover several drones simultaneously and transport them to the operational base, where they will be made available for subsequent reuse.

The drone comprises simple components of very limited weight.

The coordinates of the target zone to be reached and of the area for subsequent landing and recovery are communicated to the electronic control unit 12 which, starting from the drop point, autonomously pilots the drone to the desired zone by controlling the directional wings 10. With the simultaneous use of several drones coordinated by means of Swarm Intelligence algorithms it is possible to optimize the coverage of the target zone. In this way, the ability to selectively strike wide zones, without causing damage to elements close to the target but not affected by the flames, is obtained.

The drone described removes some limitations of the solutions commonly used to fight fires, offers a greater guarantee of operational effectiveness and is economically advantageous due to the intrinsic reliability, the simplicity of its components and the possibility of reuse.

### Numerals

1 fire fighting drone.
2 exoskeleton.
3 internal space
H axis
4 bag
6 release valve
7 fire fighting liquid
8 annular support structure
10 wings
11 thrusters
12 electronic control unit
13 sensors

## Claims

1. A fire fighting drone configured to be released from an aircraft comprising:
- an exoskeleton (2) defining an internal space (3) extending along an axis H and a flexible bag (4) stably housed in the internal space (3), provided with a release valve (6) and configured to contain a fire fighting liquid (7); the release valve (6) configured to be set between a closed position and an open position following a release command;
• a support structure (8) provided with a plurality of thrusters (11) adapted to perform a thrust that enables the support structure (8) to be supported in flight; the support structure (8) is connected to a first end portion (2-a) of the exoskeleton (2);
**characterised by** comprising:
• a plurality of movable directional wings (10) carried by the exoskeleton (2), extending outwards from the exoskeleton itself and angularly movable relative to the exoskeleton (2) around respective axes h transverse to the axis H; pairs of directional wings (10a, 10b) being spaced with respect to each other along the axis H and extend in directions parallel to the axis h; actuators that are configured to perform rotation of said directional wings (10);
• an electronic control unit (12) adapted to control said thrusters (11), generate said release command and adapted to control the actuators that perform the rotation of said directional wings (10); said electronic unit (12) being configured to control said directional wings (10) to allow the rotation of the wings during a free-fall phase of said drone which is released from an aircraft and thereby performs a certain trajectory of said drone from the aircraft to a launch zone;
• said electronic unit being configured to generate said release command upon reaching the launch zone and enable the discharge of said liquid from said bag;
• said electronic unit being adapted to perform the activation of said thrusters (11) following said discharge of said liquid to enable the flight of the support structure and of said exoskeleton containing the empty bag to a landing zone.

2. The drone according to claim 1, wherein said electronic unit (12) is configured to generate the release command upon reaching a predetermined altitude (HO) optimal relative to the ground of a pre-set type and based on signals coming from sensors (13) adapted to detect a fire, for example, optical sensors or thermal sensors.

3. The drone according to claim 2, wherein said electronic unit is configured to generate the release command at an altitude greater than the optimal predetermined altitude if said thermal sensors detect a temperature greater than a pre-set threshold in order to prevent damage to the electronic unit.

4. The drone according to any one of the preceding claims, wherein the support structure (8) is of annular type and is provided along its outer perimeter with a plurality of electric motors provided with propellers or turbines (10) with rotation axes parallel to the axis H.

## Patentansprüche

1. Eine Drohne zur Brandbekämpfung, die so konfiguriert ist, dass sie von einem Flugzeug abgeworfen werden kann, wobei die Drohne Folgendes aufweist:
- ein Exoskelett (2), das einen Innenraum (3) definiert, der sich entlang einer Achse H erstreckt, und einen flexiblen Beutel (4), der stabil in dem Innenraum (3) untergebracht ist, der mit einem Ablassventil (6) versehen ist und der so konfiguriert ist, dass er eine Feuerbekämpfungsflüssigkeit (7) enthält; wobei das Ablassventil (6) so konfiguriert ist, dass es nach einem Ablassbefehl zwischen einer geschlossenen Position und einer offenen Position eingestellt wird;
- eine Tragstruktur (8), die mit einer Vielzahl von Schubdüsen (11) versehen ist, die so ausgelegt sind, dass sie einen Schub erzeugen, der es ermöglicht, die Tragstruktur (8) im Flug zu tragen; wobei die Tragstruktur (8) mit einem ersten Endabschnitt (2-a) des Exoskeletts (2) verbunden ist;
**dadurch gekennzeichnet, dass** sie Folgendes aufweist:
- eine Vielzahl von beweglichen Richtungsflügeln (10), die von dem Exoskelett (2) getragen werden, die sich von dem Exoskelett selbst nach außen erstrecken und die relativ zu dem Exoskelett (2) um jeweilige Achsen h quer zu der Achse H winkelbeweglich sind; Paare von Richtungsflügeln (10a, 10b) sind in Richtungen parallel zu der Achse H voneinander beabstandet und erstrecken sich in Richtungen parallel zu der Achse h; Aktuatoren, die so konfiguriert sind, dass sie eine Drehung der Richtungsflügel (10) durchführen;
- eine elektronische Steuereinheit (12), die geeignet ist, die Schubdüsen (11) zu steuern, den Ablassbefehl zu erzeugen und dazu geeignet ist, die Aktuatoren zu steuern; wobei die elektronische Einheit (12) so konfiguriert ist, dass sie die Richtungsflügel (10) steuert, um die Drehung der Flügel während einer Phase des freien Falls der Drohne zu ermöglichen, die von einem Flugzeug entlassen wird und die dadurch eine bestimmte Flugbahn der Drohne vom Flugzeug zu einer Startzone ausführt;
- wobei die elektronische Einheit so konfiguriert ist, dass sie den Ablassbefehl bei Erreichen der Startzone erzeugt und dass sie das Auslassen der Flüssigkeit aus dem Beutel ermöglicht;
- die elektronische Einheit so ausgelegt ist, dass sie die Aktivierung der Schubdüsen (11) nach dem Ablassen der Flüssigkeit durchführt, um den Flug der Tragstruktur und des Exoskeletts, das den leeren Beutel enthält, zu einer Landezone zu ermöglichen.

2. Die Drohne nach Anspruch 1, wobei die elektronische Einheit (12) so konfiguriert ist, dass sie den Ablassbefehl bei Erreichen einer vorher festgelegten Höhe (HO) erzeugt, die in Bezug auf den Boden, der von einem vorher festgelegten Typ ist, optimal ist, und die und auf Signalen basiert, die von Sensoren (13) kommen, die dazu geeignet sind, ein Feuer zu erkennen, zum Beispiel optische Sensoren oder Wärmesensoren.

3. Die Drohne nach Anspruch 2, wobei die elektronische Einheit so konfiguriert ist, dass sie den Ablassbefehl bei einer Höhe erzeugt, die größer ist als die optimale, vorher festgelegte Höhe, wenn die thermischen Sensoren eine Temperatur feststellen, die größer als ein vorher festgelegter Schwellenwert ist, um eine Beschädigung der elektronischen Einheit zu verhindern.

4. Die Drohne nach einem der vorhergehenden Ansprüche,
wobei die Tragstruktur (8) ringförmig ist und entlang ihres äußeren Umfangs mit einer Vielzahl von Elektromotoren versehen ist, die mit Propellern oder Turbinen (10) versehen sind, deren Drehachsen parallel zur Achse H verlaufen.

## Revendications

1. Drone de lutte contre l'incendie configuré pour être libéré d'un aéronef, comprenant :
- un exosquelette (2) définissant un espace interne (3) s'étendant le long d'un axe H et un sac souple (4) logé de manière stable dans l'espace interne (3), pourvu d'une vanne de libération (6) et configuré pour contenir un liquide de lutte contre l'incendie (7) ; la vanne de libération (6) configurée pour passer d'une position fermée à une position ouverte à la suite d'une commande de libération ;
• une structure de support (8) pourvue d'une pluralité de propulseurs (11) adaptés pour réaliser une poussée qui permet à la structure de support (8) d'être supportée en vol ; la structure de support (8) est reliée à une première portion d'extrémité (2-a) de l'exosquelette (2) ;
**caractérisé en ce qu'**il comprend :
• une pluralité d'ailes directionnelles mobiles (10) portées par l'exosquelette (2), s'étendant vers l'extérieur de l'exosquelette lui-même et mobiles de manière angulaire par rapport à l'exosquelette (2) autour d'axes h respectifs transversaux à l'axe H ; les paires d'ailes directionnelles (10a, 10b) sont espacées l'une par rapport à l'autre le long de directions parallèles à l'axe h ;
des actionneurs configurés pour effectuer la rotation desdites ailes directionnelles (10) ;
• une unité de commande électronique (12) conçue pour commander lesdits propulseurs (11), générer ledit command de libération et conçue pour commander les actionneurs qui réalisent la rotation desdites ailes directionnelles (10) ; ladite unité électronique (12) est configurée pour commander lesdites ailes directionnelles (10) afin de permettre la rotation des ailes pendant une phase de chute libre dudit drone qui est libéré d'un aéronef et réalise ainsi une certaine trajectoire dudit drone depuis l'aéronef jusqu'à une zone de lancement ;
• ladite unité électronique étant configurée pour générer ledit command de libération lorsqu'elle atteint la zone de lancement et permettre la décharge dudit liquide dudit sac ;
• ladite unité électronique étant conçue pour réaliser l'activation desdits propulseurs (11) suite à ladite décharge dudit liquide afin de permettre le vol de la structure de support et dudit exosquelette contenant le sac vide vers une zone d'atterrissage.

2. Drone selon la revendication 1, dans lequel ladite unité électronique (12) est configurée pour générer le command de libération lorsqu'elle atteint une altitude (HO) optimale par rapport au sol d'un type prédéterminé et sur la base de signaux provenant de capteurs (13) conçus pour détecter un incendie, par exemple, des capteurs optiques ou des capteurs thermiques.

3. Drone selon la revendication 2, dans lequel ladite unité électronique est configurée pour générer le command de libération à une altitude supérieure à l'altitude optimale prédéterminée si lesdits capteurs thermiques détectent une température supérieure à un seuil prédéfini afin d'éviter d'endommager l'unité électronique.

4. Drone selon l'une quelconque des revendications précédentes, dans lequel la structure de support (8) est de type annulaire et est pourvue, le long de son périmètre extérieur, d'une pluralité de moteurs électriques dotés d'hélices ou de turbines (10) dont les axes de rotation sont parallèles à l'axe H.
